# EUROPEAN PATENT SPECIFICATION

(11) **EP 2 147 821 B1**
(45) Date of publication and mention of the grant of the patent: **09.04.2014**
(21) Application number: 09382018.1
(22) Date of filing: 06.02.2009
(51) Int. Cl.: B60N 2/48

(54) **Headrest for motor vehicle seats**
Kopfstütze für Motorfahrzeugsitze
Appuie-tête pour sièges de véhicule à moteur

(30) Priority: 24.07.2008 ES 200802204
(43) Date of publication of application: 27.01.2010
(73) Proprietor: Batz, S.Coop., 48140 Igorre (Bizkaia) (ES)
(72) Inventor: Corral Rodriguez, Pedro, 48002, Bilbao (Bizkaia) (ES); Palacio Argüelles, Joseba, 48980, Santurtzi (Bizkaia) (ES); Bidaguren Diego, Iñigo, 48003, Bilbao (Bizkaia) (ES)
(74) Representative: Igartua, Ismael

(56) References cited:
- EP-B- 1 572 494
- WO-A-2008/026372
- DE-B3- 10 335 268

## Description

### TECHNICAL FIELD

The present invention relates to a headrest for motor vehicle seats.

### PRIOR ART

There are known headrests, known as active headrests, that comprise two parts, a fixed part and a moving part, the moving part being capable of moving in the event that the vehicle receives an impact from behind, from a rest position, in which the moving part is attached to the fixed part, to an active position. In said active position, the moving part is separated from the fixed part and moves towards the occupant of the seat, thereby reducing the distance travelled by the occupant's head until it reaches its support on the headrest, and thereby reducing the risk of said occupant suffering whiplash.

DE 199 51 966 A1 discloses an active headrest in which the fixed part and the moving part are connected by a top arm and a bottom arm that pivot in conjunction to the fixed part and the moving part.

EP 1 193 114 A1 proposes an active headrest that also comprises at least one top arm and a bottom arm. In the headrest described in EP 1 193 114 A1 the top arm and the bottom arm are parallel, as a result of which the moving part remains at the same angle during its path from the rest position to the active position.

EP 1 572 494 B1, for its part, discloses an active headrest wherein the top arm and the bottom arm are not parallel, which enables paths with more suitable angles to be defined for the moving part, which, in particular, results in the lengths of the top and bottom arms being different.

WO 2008/026372 A1 and DE 103 35 268 B3 disclose active headrests according to the preamble of claim 1, both headrests comprising a linkage with a pin and slot connection in order to force the moving part to follow a specific path.

### DISCLOSURE OF THE INVENTION

It is an object of this invention to provide an active headrest as defined in the claims.

The headrest of the invention comprises a fixed part and a moving part that may move in relation to said fixed part from a rest position to an active position. The fixed part and the moving part are connected by means of at least one top linkage and a bottom linkage. One of said linkages comprises an arm that pivots in conjunction to the fixed part and to the moving part, and the other comprises a guide arm connected either to the fixed part or to the moving part, and a groove disposed in the other part, said guide arm sliding through said groove.

The headrest of the invention enables the angle of the moving part to be defined all the way along the points of its path from the rest position to the active position. This merely requires designing the outline of the guide arm in such a way that when said guide arm passes through the groove it describes a relative movement between the fixed part and the moving part that ensures the moving part is at the right angle at each point of its path, it being capable of adapting optimally to the direction in which the occupant's head impacts against the headrest in different situations.

In addition, in the headrest of the invention at least one of the pivoting arms that connect the fixed part and the moving part are dispensed with, an arm that interacts with a groove being used instead. As a result, fewer pivoting connections are used, thereby making the solution simpler and less expensive.

These and other advantages and characteristics of the invention will be made evident in the light of the drawings and the detailed description thereof.

### DESCRIPTION OF THE DRAWINGS

Figure 1 shows a profile view in longitudinal cross-section of an embodiment of the headrest of the invention, the moving part being in its rest position.
Figure 2 shows a profile view in longitudinal cross-section of the embodiment of Figure 1, the moving part being in an intermediate position.
Figure 3 shows a profile view in longitudinal cross-section of the embodiment of Figure 1, the moving part being in its active position.
Figure 4 shows the embodiment of Figure 1 in perspective, the moving part being in an intermediate position.
Figure 5 shows a first perspective of the embodiment of Figure 1, the moving part being in its active position.
Figure 6 shows a second perspective of the embodiment of Figure 1, the moving part being in its active position.
Figure 7 shows a view in detail of the profile view of Figure 1.
Figure 8 shows a perspective of the embodiment of Figure 1, the moving part being in an intermediate position.

### DETAILED DISCLOSURE OF THE INVENTION

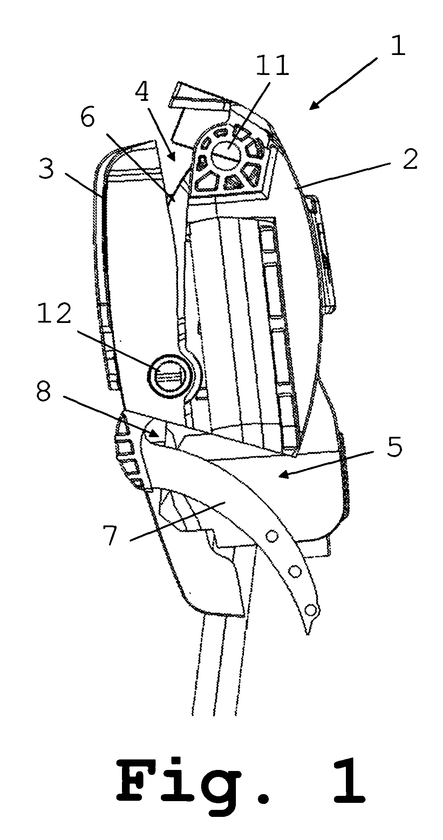

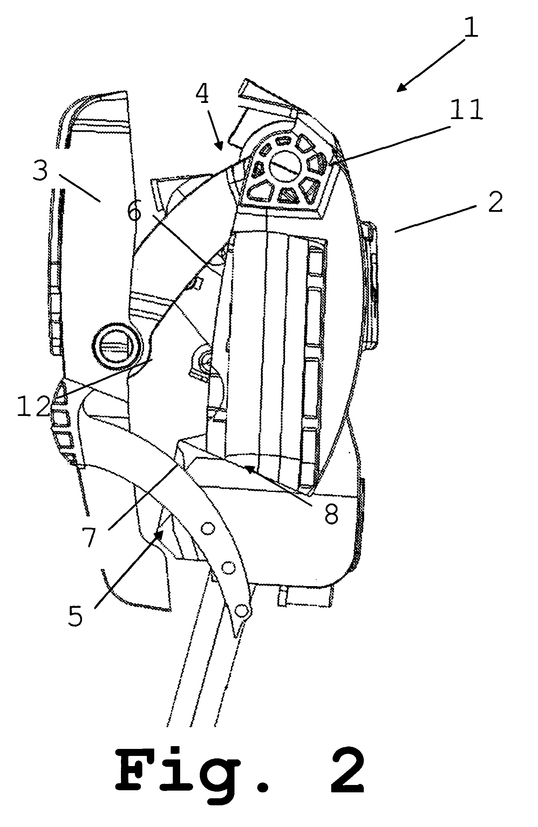

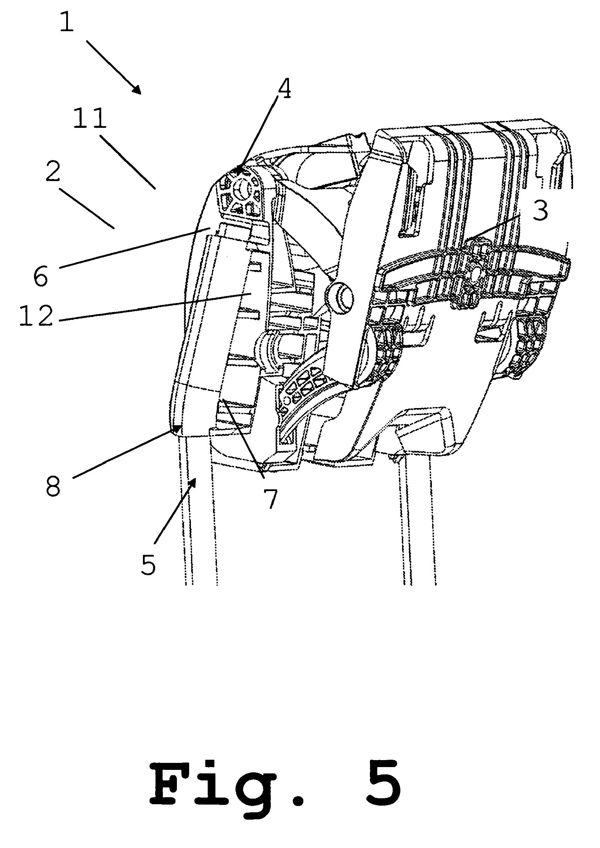

As can be seen in the embodiment shown in the figures, the headrest 1 of the invention comprises a fixed part 2 and a moving part 3, said moving part 3 being capable of being moved in relation to said fixed part 2 from a rest position (Figure 1) to an active position (figures 2, 5 and 6). The fixed part 2 and the moving part 3 are connected, in this embodiment, by means of a top linkage 4 and two lateral bottom linkages 5. The top linkage 4 comprises an arm 6 that pivots in conjunction to the fixed part 2 and the moving part 3, and the bottom linkages 5 comprise a guide arm 7 connected to the moving part 3 and a groove 8 disposed in the fixed part 2, said guide arm 7 sliding through said groove 8.

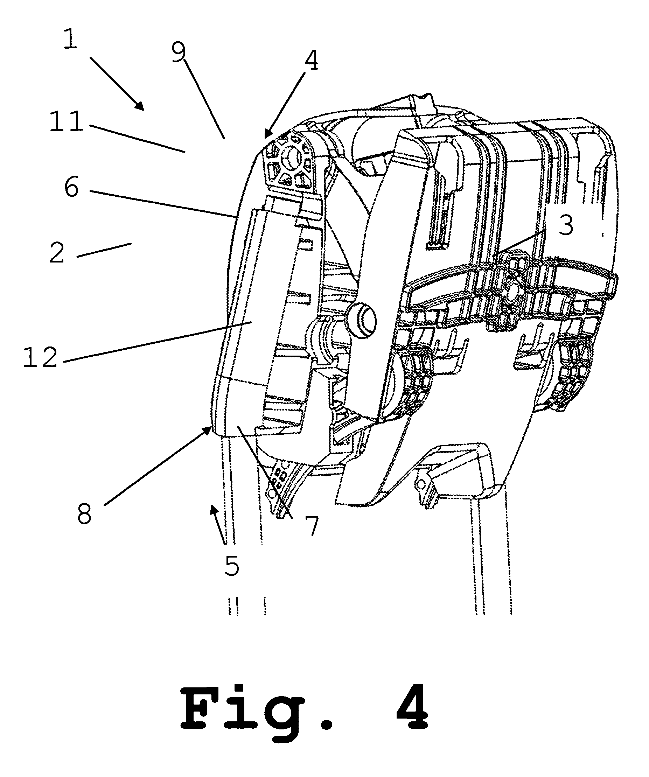

The moving part 3 is guided to the fixed part 2 by means of the connection between the guide arm 7 and the groove 8, as a result of which the angle of said moving part 3 in its rest position, its active position and at all points of the path of said moving part 3 from the rest position to the active position (for example at the intermediate points shown in figures 2, 4 and 8) is determined by said connection between the guide arm 7 and the groove 8. Thus, depending on the shape of the guide arm 7 of the moving part 3, the variation of the angle of the moving part 3 will be one or another variation. Said guide arm 7 may be designed in such a way that said variation of the angle is the most suitable for reducing the risk of the occupant suffering whiplash in the event of a collision. In a preferred embodiment, said guide arm 7 defines a curvilinear path.

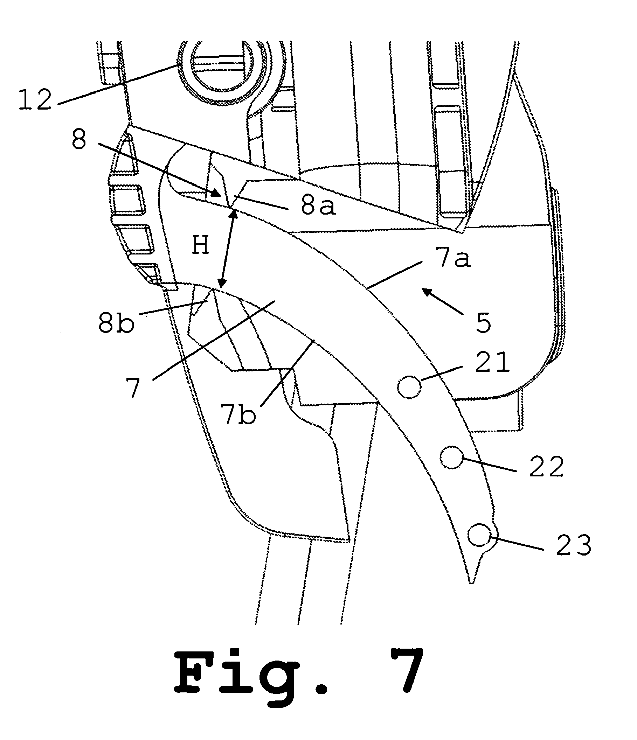

To ensure that the moving part 3 follows the required path, the outline of the guide arm 7 is such that it fits in the groove 8 in all the positions of said moving part 3. In particular, with reference to Figure 7, the height H of said groove 8 corresponds with the height of the section of the guide arm 7 that passes through said groove 8 for each position of the moving part 3. Thus, the top surface 7a and the bottom surface 7b of the guide arm 7 are shaped in such a way that on passing through the height H delimited by the top part 8a and the bottom part 8b of the groove 8 they force the moving part 3 to follow a specific path.

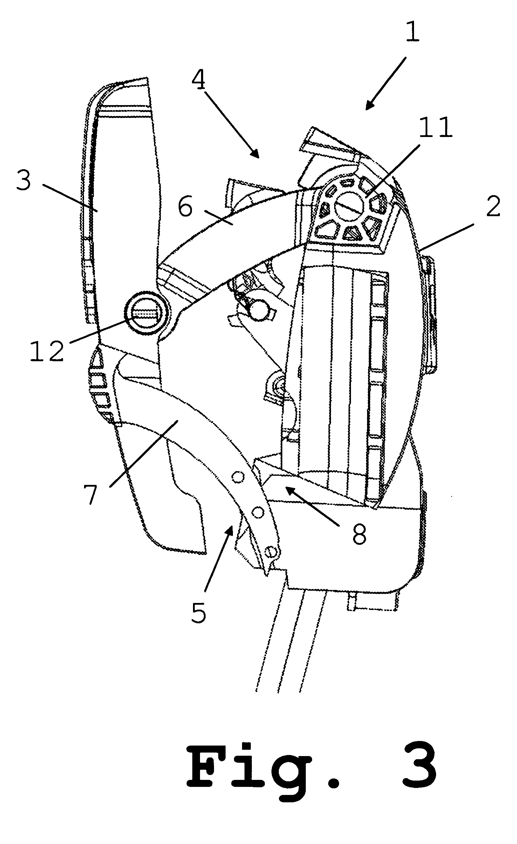

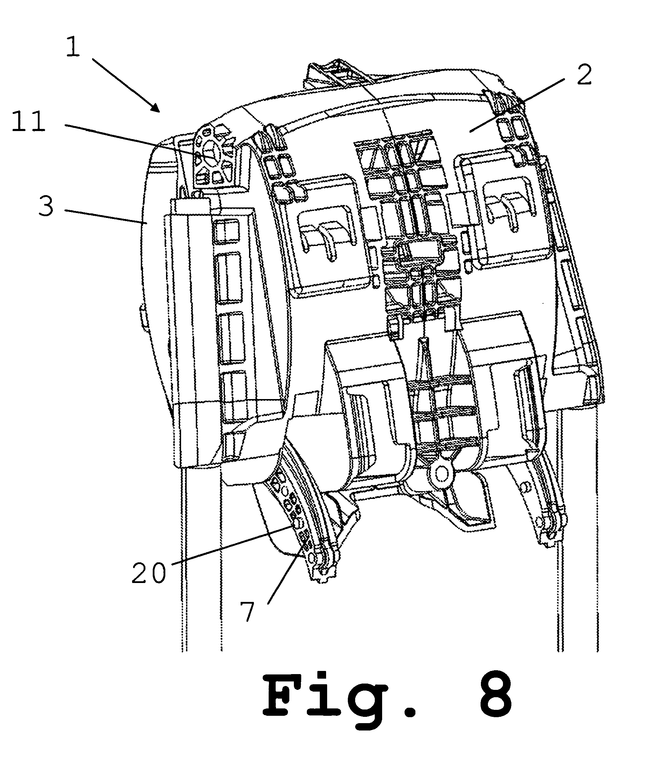

As can be seen in Figure 8, the guide arm 7 comprises a stopper 20 that delimits the most distant position of the moving part 3 in relation to the fixed part 2 (see Figure 3). The stopper 20 projects out of the outline of the guide arm 7 with the result that it cannot pass through the groove 8, the guide arm 7 not being capable of moving beyond the position in which the stopper 20 makes contact with the outline delimited by the groove 8. In this embodiment, said stopper 20 is a bolt that is housed in one of the transverse holes of the guide arm 7.

The guide arm 7 may, as is the case in this embodiment, have various transverse holes, with the result that different final positions for the moving part 3 may be chosen depending on the hole the bolt is housed in. In the embodiment shown in the figures, the guide arm 7 comprises three transverse holes, identified by reference numbers 21, 22 and 23 in Figure 7, and the stopper 20 is housed in the hole 22.

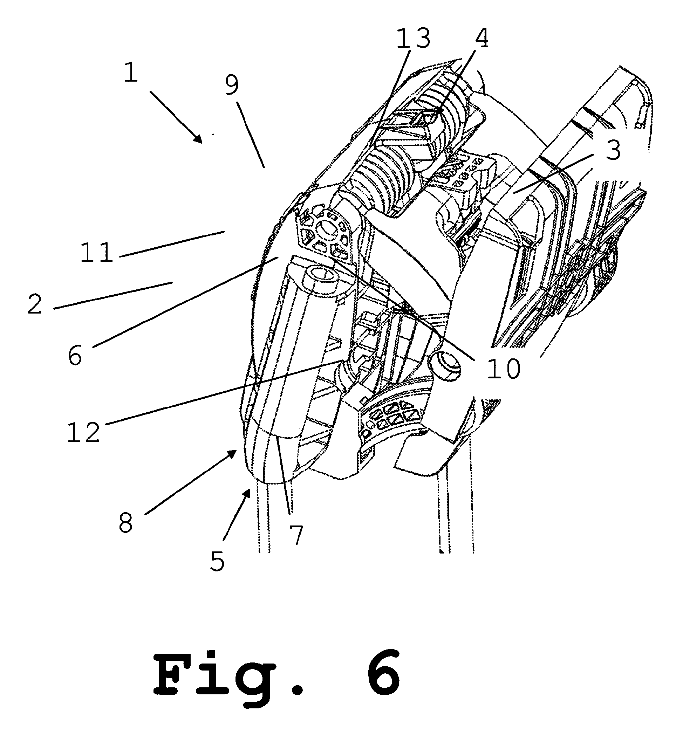

As can be seen in Figure 6, in this embodiment the arm 6 comprises two side levers 10, one of the ends of each side lever 10 pivoting in relation to a respective axle 11 disposed on the fixed part 2, both axles 11 being coaxial, and the other end of each side lever 10 pivoting in relation to a respective axle 12 of the moving part 3, both axles 12 being coaxial. The arm 6 also comprises a central body 13 by means of which both side levers 10 are connected together.

The headrest 1 of the invention comprises drive means for moving the moving part 3 in relation to the fixed part 2. In this embodiment the drive means act on the arm 6 and comprise two prestressed springs 9, one on each side of the headrest 1 and each of them linked to a side lever 10. The prestressed springs 9 are double-torsion springs that comprise a central coiled part, a first straight end connected to the fixed part 2, and a second straight end connected to the respective side lever 10. Both prestressed springs 9 may be connected together by means of a central section fixed to the fixed part 2.

The headrest 1 also comprises retention means (not shown in the figures) to keep the moving part 3 in its rest position. In the event of a collision, the retention means are released and the prestressed springs 9 move the arm 6, said arm 6 moving the moving part 3 to its active position at the same time.

## Claims

1. Headrest for motor vehicle seats, which comprises
a fixed part (2) and
a moving part (3) that is movable in relation to said fixed part (2) from a rest position to an active position following a specific path,
said fixed part (2) and said moving part (3) being connected by at least one top linkage (4) and one bottom linkage (5), and one of said linkages (4,5) comprising an arm (6) that pivots in conjunction to the fixed part (2) and to the moving part (3),
the other of said linkages (4,5) comprises a guide arm (7) connected to one of said parts (2,3) and a groove (8) disposed in the other of said parts (2,3),
**characterised in that** said groove (8) being substantially perpendicular to the specific path and having a height (H), and
said guide arm (7) sliding through said groove (8) and having an outline that fits in the groove (8) in all the positions of the moving part (3),
the guide arm (7) having a top surface (7a) and a bottom surface (7b) that are shaped in such a way that on passing through said height (H) of the groove (8) they force the moving part (3) to follow the specific path.

2. Headrest according to claim 1, wherein the top linkage (4) comprises the arm (6) and the bottom linkage (5) comprises the guide arm (7) and the groove (8).

3. Headrest according to claims 1 or 2, wherein the guide arm (7) is connected to the moving part (3) and the groove (8) is disposed in the fixed part (2).

4. Headrest according to any of the preceding claims, wherein the guide arm (7) is shaped in such a way that it defines a curvilinear path.

5. Headrest according to any of the preceding claims, wherein the guide arm (7) comprises a stopper (20) that projects out of the outline of said guide arm (7) and delimits the most distant position of the moving part (3) in relation to the fixed part (2).

6. Headrest according to claim 5, wherein the stopper (20) of the guide arm (7) comprises a bolt that is housed in a transverse hole disposed in said guide arm (7).

7. Headrest according to claim 6, wherein the guide arm (7) comprises a plurality of transverse holes disposed longitudinally, the stopper (20) being capable of being housed in any of said transverse holes.

8. Headrest according to any of the preceding claims, comprising two guide arms (7) disposed laterally and two respective grooves (8).

9. Headrest according to any of the preceding claims, comprising drive means that act on the arm (6) to move the moving part (3) in relation to the fixed part (2).

10. Headrest according to claim 9, wherein the drive means comprise at least one prestressed spring (9), one end of said prestressed spring (9) being connected to the fixed part (2) and the other end of said prestressed spring (9) being connected to the arm (6).

11. Headrest according to claim 10, wherein the arm (6) comprises two side levers (10) and a central body (13) that connects both side levers (10).

12. Headrest according to claim 11, comprising a prestressed spring (9) for each side lever (10), with one end of each prestressed spring (9) being connected to the respective side lever (10).

## Patentansprüche

1. Kopfstütze für Kraftfahrzeugsitze, die umfasst:
einen festen Teil (2), und
einen beweglichen Teil (3), der in Bezug auf den festen Teil (2) aus einer Ruheposition in eine aktive Position entlang eines spezifischen Wegs bewegbar ist,
wobei der feste Teil (2) und der bewegliche Teil (3) durch zumindest ein oberes Verbindungsstück (4) und ein unteres Verbindungsstück (5) verbunden sind, und wobei eines der beiden Verbindungsstücke (4, 5) einen Arm (6) umfasst, der in Verbindung mit dem festen Teil (2) und dem beweglichen Teil (3) schwenkt,
wobei das andere der Verbindungsstücke (4, 5) einen Führungsarm (7), der mit einem der Teile (2, 3) verbunden ist, und eine Nut (8) umfasst, die im anderen der Teile (2, 3) angeordnet ist,
**dadurch gekennzeichnet, dass** die Nut (8) im Wesentlichen normal zum spezifischen Weg verläuft und eine Höhe (H) aufweist, und
der Führungsarm (7) durch die Nut (8) gleitet und einen Umriss aufweist, der in allen Positionen des beweglichen Teils (3) in die Nut (8) passt,
der Führungsarm (7) eine Oberseite (7a) und eine Unterseite (7b) aufweist, die derart geformt sind, dass sie beim Passieren der Höhe (H) der Nut (8) den beweglichen Teil (3) zwingen, dem spezifischen Weg zu folgen.

2. Kopfstütze nach Anspruch 1, wobei das obere Verbindungsstück (4) den Arm (6) umfasst und das untere Verbindungsstück (5) den Führungsarm (7) und die Nut (8) umfasst.

3. Kopfstütze nach Anspruch 1 oder 2, wobei der Führungsarm (7) mit dem beweglichen Teil (3) verbunden ist und die Nut (8) im befestigen Teil (2) angeordnet ist.

4. Kopfstütze nach einem der vorstehenden Ansprüche, wobei der Führungsarm (7) derart geformt ist, dass er einen krummlinigen Weg definiert.

5. Kopfstütze nach einem der vorstehenden Ansprüche, wobei der Führungsarm (7) einen Anschlag (20) umfasst, der aus dem Umriss des Führungsarms (7) hervorsteht und die entfernteste Position des beweglichen Teils (3) in Bezug auf den festen Teil (2) begrenzt.

6. Kopfstütze nach Anspruch 5, wobei der Anschlag (20) des Führungsarms (7) einen Bolzen umfasst, der in einem Querloch aufgenommen ist, das im Führungsarm (7) angeordnet ist.

7. Kopfstütze nach Anspruch 6, wobei der Führungsarm (7) eine Vielzahl von Querlöchern umfasst, die längswärts angeordnet sind, wobei der Anschlag (20) in der Lage ist, in einem beliebigen der Querlöcher aufgenommen zu werden.

8. Kopfstütze nach einem der vorstehenden Ansprüche, die zwei Führungsarme (7), die seitlich angeordnet sind, und zwei jeweilige Nuten (8) umfasst.

9. Kopfstütze nach einem der vorstehenden Ansprüche, das ein Antriebsmittel umfasst, das auf den Arm (6) wirkt, um den beweglichen Teil (3) in Bezug auf den festen Teil (2) zu bewegen.

10. Kopfstütze nach Anspruch 9, wobei das Antriebsmittel zumindest eine vorbelastete Feder (9) umfasst, wobei ein Ende der vorbelasteten Feder (9) mit dem festen Teil (2) und das andere Ende der vorbelasteten Feder (9) mit dem Arm (6) verbunden ist.

11. Kopfstütze nach Anspruch 10, wobei der Arm (6) zwei Seitenhebel (10) und einen Zentralkörper (13) umfasst, der die beiden Seitenhebel (10) verbindet.

12. Kopfstütze nach Anspruch 11, die eine vorbelastete Feder (9) für jeden Seitenhebel (10) umfasst, wobei ein Ende jeder vorbelasteten Feder (9) mit dem jeweiligen Seitenhebel (10) verbunden ist.

## Revendications

1. Appui-tête pour sièges de véhicule à moteur, comprenant :
une partie fixe (2), et
une partie mobile (3) qui est mobile par rapport à ladite partie fixe (2), d'une position de repos à une position active suivant une trajectoire spécifique,
ladite partie fixe (2) et ladite partie mobile (3) étant raccordées par au moins une tringlerie supérieure (4) et une tringlerie inférieure (5), et l'une desdites tringleries (4, 5) comprenant un bras (6) qui pivote conjointement avec la partie fixe (2) et la partie mobile (3),
l'autre desdites tringleries (4, 5) comprend un bras de guidage (7) raccordé à l'une desdites parties (2, 3) et une rainure (8) disposée dans l'autre desdites parties (2, 3),
**caractérisé en ce que** ladite rainure (8) est sensiblement perpendiculaire à la trajectoire spécifique et à une hauteur (H), et
ledit bras de guidage (7) coulisse par le biais de ladite rainure (8) et a un profil qui s'adapte dans la rainure (8) dans toutes les positions de la partie mobile (3),
le bras de guidage (7) a une surface supérieure (7a) et une surface inférieure (7b) qui sont formées, de sorte que, en passant par ladite hauteur (H) de la rainure (8), elles forcent la partie mobile (3) à suivre la trajectoire spécifique.

2. Appui-tête selon la revendication 1, dans lequel la tringlerie supérieure (4) comprend le bras (6) et la tringlerie inférieure (5) comprend le bras de guidage (7) et la rainure (8).

3. Appui-tête selon les revendications 1 ou 2, dans lequel le bras de guidage (7) est raccordé à la partie mobile (3) et la rainure (8) est disposée dans la partie fixe (2).

4. Appui-tête selon l'une quelconque des revendications précédentes, dans lequel le bras de guidage (7) est formé de sorte qu'il définit une trajectoire curviligne.

5. Appui-tête selon l'une quelconque des revendications précédentes, dans lequel le bras de guidage (7) comprend une butée (20) qui fait saillie hors du profil dudit bras de guidage (7) et délimite la partie la plus distante de la partie mobile (3) par rapport à la partie fixe (2).

6. Appui-tête selon la revendication 5, dans lequel la butée (20) du bras de guidage (7) comprend un boulon qui est logé dans un trou transversal disposé dans ledit bras de guidage (7).

7. Appui-tête selon la revendication 6, dans lequel le bras de guidage (7) comprend une pluralité de trous transversaux disposés longitudinalement, la butée (20) pouvant être logée dans l'un quelconque desdits trous transversaux.

8. Appui-tête selon l'une quelconque des revendications précédentes, comprenant deux bras de guidage (7) disposés latéralement et deux rainures (8) respectives.

9. Appui-tête selon l'une quelconque des revendications précédentes, comprenant des moyens d'entraînement qui agissent sur le bras (6) pour déplacer la partie mobile (3) par rapport à la partie fixe (2).

10. Appui-tête selon la revendication 9, dans lequel les moyens d'entraînement comprennent au moins un ressort prétendu (9), une extrémité dudit ressort prétendu (9) étant raccordée à la partie fixe (2) et l'autre extrémité dudit ressort prétendu (9) étant raccordée au bras (6).

11. Appui-tête selon la revendication 10, dans lequel le bras (6) comprend deux leviers latéraux (10) et un corps central (13) qui raccorde les deux leviers latéraux (10).

12. Appui-tête selon la revendication 11, comprenant un ressort prétendu (9) pour chaque levier latéral (10), avec une extrémité de chaque ressort prétendu (9) qui est raccordée au levier latéral (10) respectif.
